# EUROPÄISCHE PATENTSCHRIFT

(11) **EP 3 703 199 B1**
(45) Veröffentlichungstag und Bekanntmachung des Hinweises auf die Patenterteilung: **27.10.2021**
(21) Anmeldenummer: 20159626.9
(22) Anmeldetag: 26.02.2020
(51) Int. Cl.: H01R 13/74

(54) **ELEKTRISCHE ANORDNUNG AN EINEM FLUGZEUGRUMPF MIT EINEM RUMPFAUSSENSEITIGEN ELEKTRISCHEN VERBRAUCHER**
ELECTRICAL ASSEMBLY ON AN AIRCRAFT FUSELAGE WITH AN ELECTRICITY CONSUMER ON THE OUTSIDE
AGENCEMENT ÉLECTRIQUE SUR UN FUSELAGE D'AVION DOTÉ D'UN CONSOMMATEUR ÉLECTRIQUE COTÉ EXTÉRIEUR DU FUSELAGE

(30) Priorität: 27.02.2019 DE 102019104929
(43) Veröffentlichungstag der Anmeldung: 02.09.2020
(73) Patentinhaber: Airbus Operations GmbH, 21129 Hamburg (DE)
(72) Erfinder: Schulze-Reimann, Kai, 21129 Hamburg (DE)
(74) Vertreter: LKGLOBAL Lorenz & Kopf PartG mbB Patentanwälte

(56) Entgegenhaltungen:
- WO-A1-2017/174939
- US-A1- 2012 318 915
- US-A1- 2018 002 033
- US-B1- 6 491 551

## Beschreibung

### TECHNISCHES GEBIET

Die Erfindung betrifft eine elektrische Anordnung an einem Flugzeugrumpf, sowie ein Flugzeug aufweisend einen Rumpf mit mindestens einer derartigen Anordnung.

### HINTERGRUND DER ERFINDUNG

Moderne Verkehrsflugzeuge weisen zahlreiche elektrische Verbraucher für viele unterschiedliche Funktionen auf. Diese können sich nicht nur im Innern eines Flugzeugrumpfs befinden, sondern auch an einer Rumpfaußenseite. Zur Ankopplung dieser an eine rumpfinnenseitig angeordnete Spannungsversorgung ist eine elektrische Verbindung erforderlich, die sich durch eine Rumpfhaut erstreckt. Ein Beispiel für einen rumpfaußenseitig angeordneten elektrischen Verbraucher ist eine Elektrolumineszenz-Vorrichtung, mit der leuchtende Elemente bereitgestellt werden können.

Zur Stromversorgung mit einem möglichst flachen Aufbau sind unterschiedliche Varianten bekannt. US 2018/0002033 A1 zeigt etwa ein bandartiges, flexibles Verbindungselement, das eine leitfähige Schicht mit einer diese umgebenden elektrischen Isolierung aufweist. Das Verbindungselement wird durch einen Schlitz in ein Rumpfinneres geführt und dort einer Spannungsversorgung zugeführt. Eine weitere elektrische Anordnung ist in WO2017174939 offenbart.

### ZUSAMMENFASSUNG DER ERFINDUNG

Es ist eine Aufgabe der Erfindung, eine alternative elektrische Anordnung für einen Rumpf eines Flugzeugs mit einem elektrischen Verbraucher an einer Außenseite des Rumpfs und einer Spannungsversorgung an einer Rumpfinnenseite vorzuschlagen, bei der eine möglichst robuste und dennoch sehr flach aufbauende elektrische Verbindung ermöglicht wird.

Diese Aufgabe wird durch die Merkmale des unabhängigen Anspruchs 1 gelöst. Vorteilhafte Ausführungsformen und Weiterbildungen der Erfindung sind den Unteransprüchen und der nachfolgenden Beschreibung zu entnehmen.

Es wird eine elektrische Anordnung an einem Flugzeugrumpf vorgeschlagen, aufweisend ein Rumpfbauteil, mindestens einen elektrischen Verbraucher, und ein leitfähiges elektrisches Verbindungselement, wobei das Rumpfbauteil eine Innenseite und eine Außenseite aufweist, wobei eine Öffnung in dem Rumpfbauteil angeordnet ist, durch die sich das elektrische Verbindungselement erstreckt, wobei das elektrische Verbindungselement einen scheibenartigen Auflageabschnitt und einen sich quer zu dem Auflageabschnitt erstreckenden Durchführungsabschnitt aufweist, wobei der Auflageabschnitt bündig an der Außenseite oder der Innenseite des Rumpfbauteils befestigt ist und der Durchführungsabschnitt von dem Auflageabschnitt durch die Öffnung hindurch verläuft und sich über die Öffnung hinaus erstreckt, wobei das elektrische Verbindungselement gegenüber der Öffnung und dem Rumpfbauteil elektrisch isoliert ist und mit einer an der Innenseite angeordneten Spannungsversorgung verbindbar ist, und wobei der mindestens eine elektrische Verbraucher an der Außenseite des Rumpfbauteils angeordnet ist und mit dem zu der Außenseite des Rumpfs ragenden Teil des Verbindungselements elektrisch verbunden ist.

Das Rumpfbauteil kann ein integraler Bestandteil des Flugzeugrumpf sein. Es könnte sich etwa um eine Rumpfschale handeln, eine sogenannte Rumpftonne oder ein anderes Bauteil, das dem Flugzeugrumpf zuzuordnen oder damit verbunden ist. Im Kontext der Erfindung ist weitgehend unerheblich, aus welchem Material das Rumpfbauteil hergestellt ist. Neben metallischen Materialien können auch Kunststoffe, faserverstärkte Kunststoffe oder Mischungen hieraus in Erwägung gezogen werden. In bestimmten Ausführungsformen, wie weiter nachfolgend ausgeführt, könnte sich eine Leitfähigkeit des Rumpfbauteils anbieten.

Der mindestens eine elektrische Verbraucher könnte, wie eingangs erwähnt, eine Elektrolumineszenzvorrichtung sein. Tatsächlich eignet sich die Erfindung jedoch auch zur elektrischen Ankopplung anderer elektrischer Verbraucher, beispielsweise Beleuchtungseinrichtungen im allgemeinen, Kommunikationsgeräte, Sensorsysteme und anderes.

Eine Kernkomponente bildet das leitfähige, elektrische Verbindungselement. Dieses weicht in seinem Aufbau deutlich von bandartigen Verbindungselementen oder von geknickten Kabeln ab. Der scheibenartige Auflageabschnitt kann zur Anordnung an der Rumpfaußenseite vorgesehen sein. Dann weist er insbesondere eine flächige Struktur auf und erstreckt sich folglich in einer Haupterstreckungsebene, die mit der Haupterstreckungsebene der betreffenden Seite des Rumpfbauteils übereinstimmt. Die in dieser Erstreckungsebene eingenommenen Dimensionen übersteigen deutlich die Stärke, d.h. die Dicke, des Auflageabschnitts. Diese könnte bevorzugt weniger als 1 mm betragen und besonders bevorzugt zwischen 0,1 und 0,8 mm und beispielhaft zwischen 0,2 und 0,5 mm liegen.

Alternativ dazu kann der Auflageabschnitt auch an der Innenseite des Rumpfbauteils angeordnet werden, so dass sich der Durchführungsabschnitt durch die Öffnung zu der Rumpfaußenseite nach außen erstreckt. Die Stärke des Auflageabschnitts muss in diesem Fall nicht so gering sein, wie bei der Anordnung an der Rumpfaußenseite.

Quer hierzu und besonders bevorzugt senkrecht, verläuft der Durchführungsabschnitt. Dessen Dimensionen könnten abhängig von mehreren Randbedingungen gestaltet sein. Diese umfassen neben dem zu erwartenden Stromfluss, einer Leitfähigkeit des verwendeten Materials, einer Handhabbarkeit durch Montagepersonal auch eine sinnvolle mechanische Festigkeit, insbesondere unter Berücksichtigung eines Differenzdrucks zwischen der Rumpfinnenseite und der Rumpfaußenseite. Weiterhin kann auch die mechanische Realisierung einer elektrischen Verbindung dimensionierend sein.

Es ist vorstellbar, mehrere derartige elektrische Verbindungselemente in dem Rumpfbauteil unabhängig voneinander einzusetzen.

Der Auflageabschnitt und der Durchführungsabschnitt könnten ein integrales Bauteil bilden. Alternativ dazu könnte das elektrische Verbindungselement auch mehrteilig ausgeführt sein, so dass der Auflageabschnitt und der Durchführungsabschnitt durch ein geeignetes Montageverfahren miteinander verbunden werden könnten. Bevorzugt ist jedoch eine integrale Bauweise dieser beiden Abschnitte in Form eines einzigen Bauteils.

Die elektrische Isolierung kann durch unterschiedliche Maßnahmen erreicht werden. Eine Variante umfasst beispielsweise das Aufbringen eines isolierenden Lacks oder eines Harzes auf die betreffenden Oberflächen des Verbindungselements. Alternativ oder zusätzlich dazu kann ein das Verbindungselement umgebender, isolierender Einsatz in der Öffnung platziert werden, der sich auch unter den von dem Auflageabschnitt eingenommenen Flächenbereich erstreckt.

Ein Pol der elektrischen Spannungsversorgung kann rumpfinnenseitig mit dem Durchführungsabschnitt oder dem Auflageabschnitt verbunden werden, je nachdem welche der beiden Abschnitte rumpfinnenseitig angeordnet sind. An dem rumpfaußenseitig liegenden Abschnitt kann der entsprechende Pol ebenso abgegriffen werden. Das Umlenken eines flexiblen, bandartigen Verbindungselements durch einen Spalt, das Umknicken einer herkömmlichen elektrischen Leitung oder andere, im Stand der Technik bekannte Varianten zur Leitungsdurchführung sind folglich nicht erforderlich. Der rumpfinnenseitig angeordnete Abschnitt kann mechanisch sehr robust mit einem bordseitigen Kabel oder einer Schiene verbunden werden. Der an der Außenseite angeordnete flächige Auflageabschnitt oder der nach außen ragende Durchführungsabschnitt kann mit einer auf einer Folie basierenden elektrischen Verbindung versehen werden, um die elektrische Verbindung zu dem Verbraucher herzustellen.

In einer vorteilhaften Ausführungsform ist der Auflageabschnitt ein äußerer Auflageabschnitt, der mit der Rumpfaußenseite verklebt ist. Der Durchführungsabschnitt kann bei der Montage von außen durch die Öffnung gesteckt werden, so dass der betreffende Auflageabschnitt mit dem Rumpfbauteil in Anschlag gerät und flach auf dem Rumpfbauteil aufliegt. Durch eine flache Verklebung und bei einer besonders flachen Ausgestaltung des Auflageabschnitts kann eine besonders geringe Aufbauhöhe auf der Rumpfaußenseite erreicht werden, welche unter aerodynamischen Gesichtspunkten unschädlich ist. Es ist dann von Vorteil, die elektrische Isolierung durch den für die Verklebung verwendeten Klebstoff realisiert werden, so dass keine zusätzliche Materialschicht vorliegt.

Eine vorteilhafte Ausführungsform weist zusätzlich einen inneren Auflageabschnitt auf, der an der Innenseite des Rumpfbauteils angeordnet ist, den Durchführungsabschnitt zumindest teilweise umgibt oder direkt benachbart dazu angeordnet ist, zu dem Durchführungsabschnitt isoliert ist und elektrisch leitend mit dem Rumpfbauteil verbunden ist. Der innere Auflageabschnitt könnte mit einem zweiten Pol einer Spannungsversorgung oder einer Masse verbunden werden. Der mindestens eine elektrische Verbraucher könnte dann durch Anschluss an dem Verbindungsbauteil und dem Rumpfbauteil mit einer Spannung versorgt werden. Durch die Anordnung des inneren Auflageabschnitts benachbart zu dem Durchführungsabschnitt oder diesen umgebend kann ein besonders vorteilhaftes elektrisches Verbindungselement realisiert werden, bei dem die Anschlüsse nebeneinander oder koaxial in Form eines Schraubverbinders oder dergleichen vorliegen.

Eine weiter vorteilhafte Ausführungsform weist zwei oder mehr äußere Auflageabschnitte auf, die jeweils einen individuellen Durchführungsabschnitt aufweisen und von einem gemeinsamen inneren Auflageabschnitt, der an der Innenseite des Rumpfbauteils angeordnet ist, elektrisch isoliert umgeben sind, wobei der innere Auflageabschnitt elektrisch leitend mit dem Rumpfbauteil verbunden ist. Mehrere unterschiedliche elektrische Verbraucher könnten damit mit individuellen elektrischen Verbindungen versorgt werden. Bei dem Beispiel der Elektrolumineszenz-Vorrichtung könnten damit mehrere unterschiedliche Felder oder Bereiche angesteuert werden. Das Rumpfbauteil kann dann als Masse wirken.

Alternativ kann der Auflageabschnitt ein innerer Auflageabschnitt sein, wobei sich der Durchführungsabschnitt durch die Öffnung zu der Rumpfaußenseite erstreckt. Folglich liegt der innere Auflageabschnitt bündig an der Rumpfinnenseite an und die elektrische Verbindung an der Außenseite kann durch ein an der Rumpfaußenseite liegendes Ende des Durchführungsabschnitt realisiert werden. Damit kann ebenso sehr präzise eine Aufbaustärke gesteuert werden. Ein besonderer Vorteil liegt in der Tatsache, dass der innere Auflageabschnitt nicht zwangsläufig sehr dünn ausgebildet sein muss, sondern primär zur Erfüllung von Handhabungs- und Montageanforderungen gestaltet sein kann.

Der Durchführungsabschnitt schließt bevorzugt im Wesentlichen plan mit der Rumpfaußenseite ab. Der Durchführungsabschnitt kann weiterhin auch leicht unterhalb der Rumpfaußenseite enden. Der auf der Rumpfaußenseite befindliche Aufbau kann demnach sehr flach realisiert werden.

Bevorzugt kann der innere Auflageabschnitt auf die Rumpfinnenseite geklebt sein. Auch hier kann der dazu eingesetzte Klebstoff gleichzeitig als elektrischer Isolator dienen und den Aufbau vereinfachen.

Ebenso könnte der Auflageabschnitt mit der Rumpfinnenseite mittels mindestens eines Verbindungsmittels elektrisch isoliert verbunden sein. Das mindestens eine Verbindungsmittel kann aus einem nicht leitfähigen Stoff bestehen. Andererseits können auch mit dem Verbindungsmittel in Berührung stehende Flächen elektrisch isoliert sein. Durch eine Verschraubung könnte eine sowohl mechanisch feste als auch für Wartungszwecke oder zur Modifikation reversible Verbindung erreicht werden.

Wird der Auflageabschnitt an der Rumpfinnenseite angeordnet, kann der innere Auflageabschnitt an einer von dem Durchführungsabschnitt abgewandten Seite einen Verbindungsabschnitt aufweisen, der von dem Auflageabschnitt zum Verbinden mit einer Spannungsversorgung absteht. Die Verbindung eines solchen Verbindungsabschnitts erfolgt dann auf dieselbe Weise wie bei einem von außen nach innen durchgeführten Durchführungsabschnitt.

Bevorzugt ist der elektrische Verbraucher mittels einer leitfähigen Beschichtung mit einem rumpfaußenseitig angeordneten Abschnitt des elektrischen Verbindungselements verbunden, wobei die leitfähige Beschichtung den rumpfaußenseitig angeordneten Abschnitt zumindest teilweise überdeckt. Die elektrische Verbindung könnte unter einer geschlossenen Lackschicht mit einer dünnen und gegebenenfalls großflächigen leitfähigen Beschichtung mit einer sehr geringen Aufbaustärke und einem geringen Gewicht realisiert werden. Ferner ist die elektrische Verbindung an der Außenseite des Flugzeugs praktisch nicht sichtbar.

Bevorzugt weist das Rumpfbauteil ein leitfähiges Material auf. Damit kann zumindest an bestimmten Stellen eine Leitfähigkeit als Masseverbindung hergestellt werden, die sich durch das gesamte Rumpfbauteil erstreckt. Das leitfähige Material könnte sich über das gesamte Rumpfbauteil erstrecken oder es könnten diskrete Leiterbahnen oder leitfähige Abschnitte integriert sein, die die Masseverbindung sowohl rumpfinnenseitig als auch rumpfaußenseitig ermöglicht.

Wie vorangehend erwähnt könnte der Auflageabschnitt an das Rumpfbauteil mittels eines Klebstoffs geklebt sein, wobei der Klebstoff elektrisch isolierend ist.

Die Erfindung betrifft ferner ein Flugzeug, aufweisend einen Rumpf mit mindestens einer derartigen Anordnung.

In einer vorteilhaften Ausführungsform kann der mindestens eine elektrische Verbraucher eine Elektrolumineszenz-Vorrichtung sein.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt ein erstes Ausführungsbeispiel einer elektrischen Anordnung mit einem äußeren Auflageabschnitt in einer Schnittansicht.
Fig. 2 zeigt ein zweites Ausführungsbeispiel einer elektrischen Anordnung mit mehreren äußeren Auflageabschnitten in einer Schnittansicht.
Fig. 3 zeigt ein drittes Ausführungsbeispiel einer elektrischen Anordnung mit einem inneren Auflageabschnitt in einer Schnittansicht.
Fig. 4 zeigt ein Flugzeug.

### DETAILLIERTE DARSTELLUNG EXEMPLARISCHER AUSFÜHRUNGSFORMEN

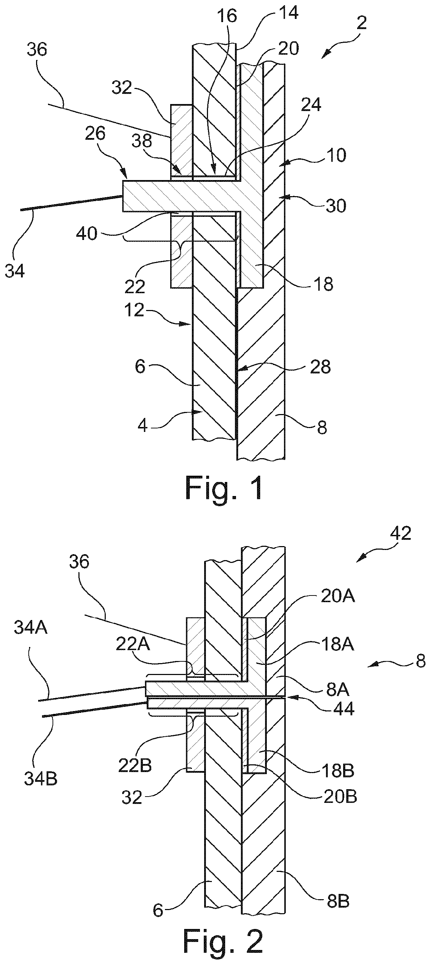

Fig. 1 zeigt ein erstes Ausführungsbeispiel einer elektrischen Anordnung 2 an einem Flugzeugrumpf 4. Die Anordnung 2 weist ein Rumpfbauteil 6, einen elektrischen Verbraucher 8 in Form einer Elektrolumineszenz-Vorrichtung und ein leitfähiges, elektrisches Verbindungselement 10 auf. Das Rumpfbauteil 6 weist eine Innenseite 12 sowie eine Außenseite 14 auf. In dem Rumpfbauteil 4 befindet sich eine Öffnung 16, die sich vollständig durch eine Materialstärke des Rumpfbauteils 6 erstreckt.

Das elektrische Verbindungselement 10 weist einen scheibenartigen Auflageabschnitt 18 auf, der in diesem Beispiel an der Rumpfaußenseite 14 angeordnet ist.

Er wird weiter nachfolgend daher als äußerer Auflageabschnitt 18 bezeichnet. Dieser ist über eine Klebeschicht 20 mit der Rumpfaußenseite 14 verklebt. Die Klebeschicht 20 ist exemplarisch elektrisch isolierend ausgeführt. Der äußere Auflageabschnitt 18 ist sehr flach ausgeführt und könnte beispielsweise eine Materialstärke unter 1 mm aufweisen.

Quer dazu erstreckt sich ein Durchführungsabschnitt 22, der von dem äußeren Auflageabschnitt 18 durch die Öffnung 16 über die Innenseite 12 hinaus verläuft. Im Bereich der Öffnung 16 ist eine weitere Klebeschicht 24 angeordnet, welche ebenso bevorzugt elektrisch isolierend ist. Das Verbindungselement 10 ist elektrisch leitfähig ausgeführt, so dass beim Anlegen eines Spannungspols an einem inneren Ende 26 des Durchführungsabschnitts 22 der Spannungspol auch an dem äußeren Auflageabschnitt 18 anliegt. Durch die elektrische Isolierung mittels der Klebeschichten 20 und 24 kann der äußere Auflageabschnitt 18 ein anderes Potenzial aufweisen, als beispielsweise das Rumpfbauteil 6 selbst.

Der elektrische Verbraucher 8 weist in dem gezeigten Beispiel einen sehr flachen Aufbau auf, der die aerodynamischen Eigenschaften des Flugzeugs möglich nicht beeinflussen soll. Beispielhaft kann der Verbraucher 8 über eine Lackschicht 28 auf der Rumpfaußenseite 14 elektrisch von dem Rumpfbauteil 6 isoliert sein. Durch eine elektrisch leitfähige Beschichtung 30 kann der Verbraucher 8 mit dem äußeren Auflageabschnitt 18 elektrisch verbunden werden.

An der Rumpfinnenseite 12 ist eine zusätzliche Auflagescheibe 32 vorgesehen, die bündig auf der Rumpfinnenseite 12 aufliegt und elektrisch mit dem Rumpfbauteil 6 verbunden ist. Die Auflagescheibe 32 und das Rumpfbauteil 6 könnten hierzu ein leitfähiges Material aufweisen. Das Rumpfbauteil 6 muss nicht in Gänze aus einem leitfähigen Material bestehen, sondern kann lediglich leitfähige Abschnitte besitzen. Die innere Auflagescheibe 32 kann mit einem Massepol verbunden werden, so dass der Verbraucher 8 hiermit über das Rumpfbauteil 6 verbindbar ist.

Die innere Auflagescheibe 32 weist eine Öffnung 38 auf, durch die sich der Durchführungsabschnitt 22 des Verbindungselements 10 erstreckt. Dort ist eine ringförmig um den Durchführungsabschnitt 22 angeordnete Isolierschicht 40 vorgesehen, so dass eine elektrische Verbindung dieser beiden Komponenten ausgeschlossen werden kann.

Beispielhaft werden in Fig. 1 ein erstes Anschlusskabel 34 und ein zweites Anschlusskabel 36 gezeigt, das mit dem elektrischen Verbindungselement 10 oder der Auflagescheibe 32 verbunden ist. Selbstverständlich kann zur Verbindung auch ein schraubbarer elektrischer Verbinder eingesetzt werden.

Fig. 2 zeigt eine modifizierte Variante in Form einer Anordnung 42. Hier ist der elektrische Verbraucher 8 in Form zweier einzelner Verbraucher 8A und 8B unterteilt, die an einer Trennstelle 44 elektrisch voneinander isoliert sind. Jeder der Verbraucher 8A und 8B ist mit einem äußeren Auflageabschnitt 18A bzw. 18 B elektrisch verbunden. Beide sind über eine Klebeschicht 20A bzw. 20B zu der Rumpfaußenseite 14 isoliert. Beide äußeren Auflageabschnitte 18A und 18B sind jeweils mit einem Durchführungsabschnitt 22A und 22B verbunden, welche sich durch die Öffnungen 16 und 38 erstrecken. Beide Durchführungsabschnitte 22A und 22B sind folglich mit unterschiedlichen Spannungspolen verbindbar. Die Verbraucher 8A und 8B können trotz lediglich einer einzigen elektrischen Durchführung mit unterschiedlichen Spannungen versorgt bzw. getrennt voneinander angesteuert werden.

Auch in diesem Ausführungsbeispiel ist die zusätzliche, innere Auflagescheibe 32 vorgesehen, welche mit einem Massepol verbindbar ist. Dadurch kann für sämtliche Verbraucher 8A und 8B eine Rückleitung bzw. Masseverbindung ermöglicht werden.

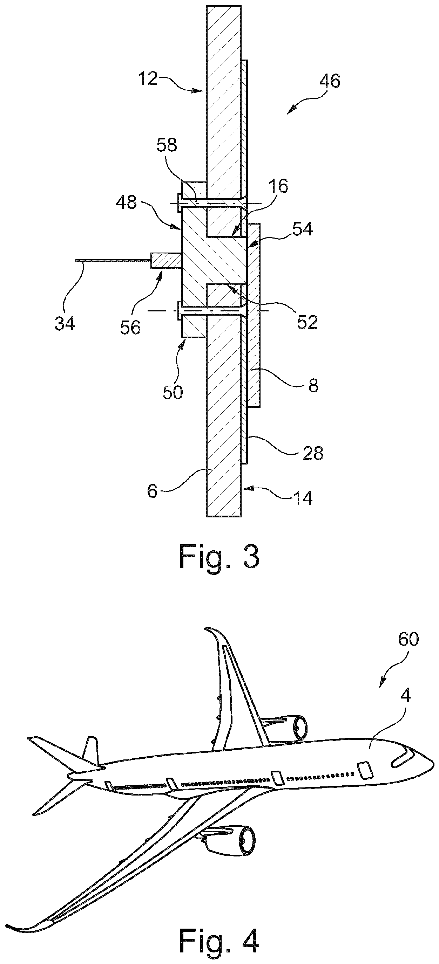

Fig. 3 zeigt eine alternative Anordnung 46, bei der ein elektrisches Verbindungselement 48 vorgesehen ist, der einen inneren Auflageabschnitt 50 besitzt. Dieser ist an die Rumpfinnenseite 12 gesetzt und weist einen Durchführungsabschnitt 52 auf, der sich durch die Öffnung 16 nach außen erstreckt. Der Durchführungsabschnitt 52 könnte sich in einem sehr geringen Abstand über der Rumpfaußenseite 14 befinden, so dass er leicht von dieser absteht. Hierdurch könnte ein Absatz entstehen, der eine Stärke von deutlich unter 1 mm aufweist. Selbstverständlich kann durch geeignete Maßnahmen eine vollständig plane Ausführung mit einer randseitigen Isolierung vorliegen. Es ist weiterhin denkbar, dass der Durchführungsabschnitt 52 etwas unterhalb der Außenhaut endet, so dass eine noch flachere Ausführung erreicht wird.

Auf der Rumpfaußenseite 14 ist eine Lackschicht 28 angeordnet, auf der der elektrische Verbraucher 8 aufgelegt ist. Dieser kann direkt über eine leitfähige Beschichtung mit einer nach außen gewandten Oberfläche 54 des Durchführungsabschnitts 52 verbunden werden. An dem inneren Auflageabschnitt 50 ist ein zusätzlicher Verbindungsabschnitt 56 angeordnet, der von dem inneren Auflageabschnitt 50 absteht und mit einer Spannungsversorgung, d.h. einem Spannungspol, verbindbar ist.

Beispielhaft ist das Verbindungselement 48 mit dem Rumpfbauteil 6 verschraubt und weist hierfür Verbindungsmittel 58 in Form von Schrauben oder ähnlichem auf. Es versteht sich, dass die Verbindung bevorzugt elektrisch isoliert ist.

Schließlich zeigt Fig. 4 ein Flugzeug 60 mit einem Rumpf 4, dass mindestens eine vorangehend dargestellte Anordnung 2,42 oder 46 aufweist.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Anordnung
- 4: Flugzeugrumpf
- 6: Rumpfbauteil
- 8, 8A, 8B: elektrischer Verbraucher
- 10: elektrisches Verbindungselement
- 12: Innenseite
- 14: Außenseite
- 16: Öffnung
- 18, 18A, 18B: Auflageabschnitt
- 20, 20A, 20B: Klebeschicht
- 22, 22A, 22B: Durchführungsabschnitt
- 24: Klebeschicht
- 26: inneres Ende
- 28: Lackschicht
- 30: elektrisch leitfähige Beschichtung
- 32: Auflagescheibe
- 34, 34A, 34B: erstes Anschlusskabel
- 36: zweites Anschlusskabel
- 38: Öffnung
- 40: Isolierschicht
- 42: Anordnung
- 44: Trennstelle
- 46: Anordnung
- 48: elektrisches Verbindungselement
- 50: innerer Auflageabschnitt
- 52: Durchführungsabschnitt
- 54: Oberfläche
- 56: Verbindungsabschnitt
- 58: Verbindungsmittel
- 60: Flugzeug

## Patentansprüche

1. Elektrische Anordnung (2, 46) für einen Flugzeugrumpf (4), aufweisend:
- ein Rumpfbauteil (6),
- mindestens einen elektrischen Verbraucher (8, 8A, 8B), und
- ein leitfähiges elektrisches Verbindungselement (10, 48),
wobei das Rumpfbauteil (6) eine Innenseite (12) und eine Außenseite (14) aufweist,
wobei eine Öffnung (16) in dem Rumpfbauteil (6) angeordnet ist, durch die sich das elektrische Verbindungselement (10, 48) erstreckt,
**dadurch gekennzeichnet,**
**dass** das elektrische Verbindungselement (10) einen scheibenartigen Auflageabschnitt (18, 18A, 18B, 50) und einen sich quer zu dem Auflageabschnitt (18, 18A, 18B, 50) erstreckenden Durchführungsabschnitt (22, 22A, 22B, 52) aufweist,
wobei der Auflageabschnitt (18, 18A, 18B, 50) bündig an der Außenseite (14) oder der Innenseite (12) des Rumpfbauteils (6) befestigt ist und der Durchführungsabschnitt (22, 22A, 22B, 52) von dem Auflageabschnitt (18, 18A, 18B, 50) durch die Öffnung (16) hindurch verläuft und sich über die Öffnung (16) hinaus erstreckt,
wobei das elektrische Verbindungselement (10, 48) gegenüber der Öffnung (16) und dem Rumpfbauteil (6) elektrisch isoliert ist und mit einer an der Innenseite (12) angeordneten Spannungsversorgung verbindbar ist, und
wobei der mindestens eine elektrische Verbraucher (8, 8A, 8B) an der Außenseite (14) des Rumpfbauteils (6) angeordnet ist und mit dem zu der Außenseite (14) des Rumpfs (4) ragenden Teil des Verbindungselements (10, 48) elektrisch verbunden ist.

2. Anordnung (2, 46) nach Anspruch 1,
wobei der Auflageabschnitt (18, 18A, 18B, 50) ein äußerer Auflageabschnitt (18, 18A, 18B) ist, der mit der Rumpfaußenseite (14) verklebt ist.

3. Anordnung (2, 46) nach Anspruch 2,
zusätzlich aufweisend einen inneren Auflageabschnitt (50), der an der Innenseite (12) des Rumpfbauteils (4) angeordnet ist, den Durchführungsabschnitt (22, 22A, 22B, 52) zumindest teilweise umgibt oder direkt benachbart dazu angeordnet ist, zu dem Durchführungsabschnitt (22, 22A, 22B, 52) isoliert ist und elektrisch leitend mit dem Rumpfbauteil (6) verbunden ist.

4. Anordnung (2, 46) nach Anspruch 2 oder 3,
aufweisend zwei oder mehr äußere Auflageabschnitte (18, 18A, 18B), die jeweils einen individuellen Durchführungsabschnitt (22, 22A, 22B, 52) aufweisen und von einem gemeinsamen inneren Auflageabschnitt (50), der an der Innenseite (12) des Rumpfbauteils (6) angeordnet ist, elektrisch isoliert umgeben sind, wobei der innere Auflageabschnitt (50) elektrisch leitend mit dem Rumpfbauteil (6) verbunden ist.

5. Anordnung (2, 46) nach Anspruch 1,
wobei der Auflageabschnitt (18, 18A, 18B, 50) ein innerer Auflageabschnitt (50) ist,
wobei sich der Durchführungsabschnitt (22, 22A, 22B, 52) durch die Öffnung (16) zu der Rumpfaußenseite (14) erstreckt.

6. Anordnung (2, 46) nach Anspruch 5,
wobei sich der Durchführungsabschnitt (22, 22A, 22B, 52) im Wesentlichen plan mit der Rumpfaußenseite (14) abschließt.

7. Anordnung (2, 46) nach Anspruch 5 oder 6,
wobei der innere Auflageabschnitt (50) auf die Rumpfinnenseite (12) geklebt ist.

8. Anordnung (2, 46) nach einem der Ansprüche 5 bis 7,
wobei der innere Auflageabschnitt (50) mit der Rumpfinnenseite (12) mittels mindestens eines Verbindungsmittels (58) elektrisch isoliert verbunden ist.

9. Anordnung (2, 46) nach einem der Ansprüche 5 bis 8,
wobei der innere Auflageabschnitt (50) an einer von dem Durchführungsabschnitt (22, 22A, 22B, 52) abgewandten Seite einen Verbindungsabschnitt (56) aufweist, der von dem inneren Auflageabschnitt (50) zum Verbinden mit einer Spannungsversorgung absteht.

10. Anordnung (2, 46) nach einem der vorhergehenden Ansprüche,
wobei der elektrische Verbraucher (8, 8A, 8B) mittels einer leitfähigen Beschichtung (30) mit einem rumpfaußenseitig angeordneten Abschnitt des elektrischen Verbindungselements (10, 48) verbunden ist, wobei die leitfähige Beschichtung (30) den rumpfaußenseitig angeordneten Abschnitt zumindest teilweise überdeckt.

11. Anordnung (2, 46) nach einem der vorhergehenden Ansprüche,
wobei das Rumpfbauteil (6) ein leitfähiges Material aufweist.

12. Anordnung (2, 46) nach einem der vorhergehenden Ansprüche,
wobei der Auflageabschnitt (18, 18A, 18B, 50) an das Rumpfbauteil (6) mittels eines Klebstoffs geklebt ist, wobei der Klebstoff elektrisch isolierend ist.

13. Flugzeug (60), aufweisend einen Rumpf (4) mit mindestens einer Anordnung (2, 46) nach einem der vorhergehenden Ansprüche.

14. Flugzeug (60) nach Anspruch 13, wobei der mindestens eine elektrische Verbraucher (8, 8A, 8B) eine Elektrolumineszenz-Vorrichtung ist.

## Claims

1. Electrical arrangement (2, 46) for an aircraft fuselage (4), having:
- a fuselage component (6),
- at least one electrical consumer (8, 8A, 8B), and
- a conductive electrical connection element (10, 48),
wherein the fuselage component (6) has an inside (12) and an outside (14),
wherein an opening (16) through which the electrical connection element (10, 48) extends is arranged in the fuselage component (6),
**characterized in that** the electrical connection element (10) has a plate-shaped bearing section (18, 18A, 18B, 50) and a feedthrough section (22, 22A, 22B, 52) extending transverse to the bearing section (18, 18A, 18B, 50),
wherein the bearing section (18, 18A, 18B, 50) is attached flush to the outside (14) or the inside (12) of the fuselage component (6) and the feedthrough section (22, 22A, 22B, 52) runs from the bearing section (18, 18A, 18B, 50) through the opening (16) and extends beyond the opening (16),
wherein the electrical connection element (10, 48) is electrically insulated from the opening (16) and the fuselage component (6) and is able to be connected to a voltage supply arranged on the inside (12), and
wherein the at least one electrical consumer (8, 8A, 8B) is arranged on the outside (14) of the fuselage component (6) and is electrically connected to that part of the connection element (10, 48) projecting towards the outside (14) of the fuselage (4).

2. Arrangement (2, 46) according to Claim 1,
wherein the bearing section (18, 18A, 18B, 50) is an outer bearing section (18, 18A, 18B) that is adhesively bonded to the outside of the fuselage (14).

3. Arrangement (2, 46) according to Claim 2,
additionally having an inner bearing section (50) that is arranged on the inside (12) of the fuselage component (4), at least partly surrounds the feedthrough section (22, 22A, 22B, 52) or is arranged directly adjacent thereto, is insulated from the feedthrough section (22, 22A, 22B, 52) and is electrically conductively connected to the fuselage component (6).

4. Arrangement (2, 46) according to Claim 2 or 3,
having two or more outer bearing sections (18, 18A, 18B) that each have an individual feedthrough section (22, 22A, 22B, 52) and are surrounded in an electrically insulating manner by a common inner bearing section (50) that is arranged on the inside (12) of the fuselage component (6), wherein the inner bearing section (50) is electrically conductively connected to the fuselage component (6).

5. Arrangement (2, 46) according to Claim 1,
wherein the bearing section (18, 18A, 18B, 50) is an inner bearing section (50),
wherein the feedthrough section (22, 22A, 22B, 52) extends through the opening (16) towards the outside of the fuselage (14).

6. Arrangement (2, 46) according to Claim 5,
wherein the feedthrough section (22, 22A, 22B, 52) terminates in a manner substantially planar with the outside of the fuselage (14).

7. Arrangement (2, 46) according to Claim 5 or 6,
wherein the inner bearing section (50) is adhesively bonded to the inside of the fuselage (12).

8. Arrangement (2, 46) according to one of Claims 5 to 7,
wherein the inner bearing section (50) is connected in an electrically insulated manner to the inside of the fuselage (12) by way of at least one connection means (58) .

9. Arrangement (2, 46) according to one of Claims 5 to 8,
wherein the inner bearing section (50) has a connection section (56) on a side facing away from the feedthrough section (22, 22A, 22B, 52) and that protrudes from the inner bearing section (50) in order to be connected to a voltage supply.

10. Arrangement (2, 46) according to one of the preceding claims,
wherein the electrical consumer (8, 8A, 8B) is connected to a section, arranged on the outside of the fuselage, of the electrical connection element (10, 48) by way of a conductive coating (30), wherein the conductive coating (30) at least partially covers the section arranged on the outside of the fuselage.

11. Arrangement (2, 46) according to one of the preceding claims,
wherein the fuselage component (6) comprises a conductive material.

12. Arrangement (2, 46) according to one of the preceding claims,
wherein the bearing section (18, 18A, 18B, 50) is adhesively bonded to the fuselage component (6) by way of an adhesive, wherein the adhesive is electrically insulating.

13. Aircraft (60), having a fuselage (4) with at least one arrangement (2, 46) according to one of the preceding claims.

14. Aircraft (60) according to Claim 13, wherein the at least one electrical consumer (8, 8A, 8B) is an electroluminescent device.

## Revendications

1. Agencement électrique (2, 46) pour un fuselage d'avion (4), présentant :
- une pièce structurelle de fuselage (6),
- au moins un consommateur électrique (8, 8A, 8B), et
- un élément de connexion électrique conducteur (10, 48),
la pièce structurelle de fuselage (6) présentant une face intérieure (12) et une face extérieure (14),
une ouverture (16) étant agencée dans la pièce structurelle de fuselage (6), à travers laquelle s'étend l'élément de connexion électrique (10, 48),
**caractérisé en ce que** l'élément de connexion électrique (10) présente une partie d'appui en forme de disque (18, 18A, 18B, 50) et une partie de passage (22, 22A, 22B, 52) s'étendant transversalement à la partie d'appui (18, 18A, 18B, 50),
la partie d'appui (18, 18A, 18B, 50) étant fixée à fleur de la face extérieure (14) ou de la face intérieure (12) de la pièce structurelle de fuselage (6), et la partie de passage (22, 22A, 22B, 52) s'étendant de la partie d'appui (18, 18A, 18B, 50) à travers l'ouverture (16) et dépassant de l'ouverture (16),
l'élément de connexion électrique (10, 48) étant électriquement isolé par rapport à l'ouverture (16) et à la pièce structurelle de fuselage (6) et pouvant être connecté à une alimentation en tension agencée sur la face intérieure (12), et
ledit au moins un consommateur électrique (8, 8A, 8B) étant agencé sur la face extérieure (14) de la pièce structurelle de fuselage (6) et étant connecté électriquement à la partie de l'élément de connexion (10, 48) faisant saillie vers la face extérieure (14) du fuselage (4).

2. Agencement (2, 46) selon la revendication 1, dans lequel la partie d'appui (18, 18A, 18B, 50) est une partie d'appui extérieure (18, 18A, 18B) qui est collée sur la face extérieure de fuselage (14).

3. Agencement (2, 46) selon la revendication 2, présentant en outre une partie d'appui intérieure (50) qui est agencée sur la face intérieure (12) de la pièce structurelle de fuselage (4), entoure au moins partiellement ou est directement adjacente à la partie de passage (22, 22A, 22B, 52), est isolée par rapport à la partie de passage (22, 22A, 22B, 52) et est connectée de manière électriquement conductrice à la pièce structurelle de fuselage (6).

4. Agencement (2, 46) selon la revendication 2 ou 3, présentant deux ou plusieurs parties d'appui extérieures (18, 18A, 18B) qui présentent respectivement une partie de passage individuelle (22, 22A, 22B, 52) et sont entourées de manière électriquement isolante par une partie d'appui intérieure (50) commune qui est agencée sur la face intérieure (12) de la pièce structurelle de fuselage (6), la partie d'appui intérieure (50) étant connectée de manière électriquement conductrice à la pièce structurelle de fuselage (6).

5. Agencement (2, 46) selon la revendication 1,
la partie d'appui (18, 18A, 18B, 50) étant une partie d'appui intérieure (50),
la partie de passage (22, 22A, 22B, 52) s'étendant à travers l'ouverture (16) jusqu'à la face extérieure de fuselage (14).

6. Agencement (2, 46) selon la revendication 5, dans lequel la partie de passage (22, 22A, 22B, 52) se termine substantiellement de manière plane avec la face extérieure de fuselage (14).

7. Agencement (2, 46) selon la revendication 5 ou 6, dans lequel la partie d'appui intérieure (50) est collée sur la face intérieure de fuselage (12).

8. Agencement (2, 46) selon l'une quelconque des revendications 5 à 7, dans lequel la partie d'appui intérieure (50) est connectée de manière électriquement isolée à la face intérieure de fuselage (12) au moyen d'au moins un moyen de connexion (58).

9. Agencement (2, 46) selon l'une quelconque des revendications 5 à 8, dans lequel la partie d'appui intérieure (50) présente sur une face détournée de la partie de passage (22, 22A, 22B, 52) une partie de connexion (56) qui dépasse de la partie d'appui intérieure (50) pour une connexion à une alimentation en tension.

10. Agencement (2, 46) selon l'une quelconque des revendications précédentes, dans lequel le consommateur électrique (8, 8A, 8B) est connecté au moyen d'un revêtement conducteur (30) à une partie, agencée du côté extérieur du fuselage, de l'élément de connexion électrique (10, 48), le revêtement conducteur (30) recouvrant au moins partiellement la partie agencée du côté extérieur du fuselage.

11. Agencement (2, 46) selon l'une quelconque des revendications précédentes, dans lequel la pièce structurelle de fuselage (6) présente un matériau conducteur.

12. Agencement (2, 46) selon l'une quelconque des revendications précédentes, dans lequel la partie d'appui (18, 18A, 18B, 50) est collée sur la pièce structurelle de fuselage (6) au moyen d'un adhésif, l'adhésif étant électriquement isolant.

13. Avion (60), présentant un fuselage (4) comprenant au moins un agencement (2, 46) selon l'une quelconque des revendications précédentes.

14. Avion (60) selon la revendication 13, dans lequel ledit au moins un consommateur électrique (8, 8A, 8B) est un dispositif électroluminescent.
